# EUROPEAN PATENT APPLICATION

(11) **EP 1 734 171 A1**
(43) Date of publication of application: **20.12.2006**
(21) Application number: 05727274.2
(22) Date of filing: 01.04.2005
(51) Int. Cl.: D06M 15/507, C08K 5/521, C08L 67/02, D04H 1/46, D06M 13/292

(54) **FIBER-TREATING AGENT, SHORT POLYESTER FIBER MADE WITH THE SAME, AND NONWOVEN FABRIC**

(30) Priority: 07.04.2004 JP 2004141684
(71) Applicant: MATSUMOTO YUSHI-SEIYAKU CO., LTD., Yao-shi, Osaka 581-0075 (JP)
(72) Inventor: NAKAMURA, Yutaka, MATSUMOTO YUSHI-SEIYAKU CO., LTD, Yao-shi, Osaka 581-0075 (JP)
(74) Representative: Benedum, Ulrich Max
(86) International application number: PCT/JP2005/006492
(87) International publication number: WO 2005/098124

(57) **Abstract**

The present invention provides a fiber-treating agent comprising a component A, which is a polyester compound produced by carrying out a condensation polymerization of an alkylene glycol, a polyalkylene glycol, and at least one member selected from the group consisting of aromatic dicarboxylic acids, C₄₋₂₂ aliphatic dicarboxylic acids, and their ester-forming derivatives; a component B, which is a polyester compound produced by carrying out a condensation polymerization of a polyoxyalkylene monol, an alkylene glycol, and at least one member selected from the group consisting of aromatic dicarboxylic acids and their ester-forming derivatives; and a component C, which is a C₄₋₆ alkyl phosphate salt; and is **characterized by** components A, B, and C being blended in specific ratios. Also provided are polyester staple fibers treated with the treating agent, and a nonwoven fabric manufactured by processing the polyester staple fibers with high-pressure water jets.

## Description

### BACKGROUND OF THE INVENTION

### Field of the Invention

The present invention relates to a fiber-treating agent for polyester staple fibers and the like which are used to manufacture nonwoven fabrics in a high-pressure water jet process; polyester staple fibers; and nonwoven fabrics. The present invention, in particular, relates to a fiber-treating agent, which, in the nonwoven manufacturing process, exhibits superior static electricity generation control and card passability, as well as low foaming, hard water stability, and durable hydrophilicity during a high-pressure water jet process; and polyester staple fibers and nonwoven fabric used therewith.

### Background Information

Nonwoven fabrics for towels and premoistened towels have been conventionally manufactured with a high-pressure water jet process. In this process, some trials have been carried out for manufacturing nonwoven fabrics of polyester staple fibers. Polyester fibers, however, create a problem, i.e., insufficient hydrophilicity of nonwoven fabric for end uses as towels and premoistened towels, because polyester fibers are hydrophobic and a fiber-treating agent is apt to be washed off in the nonwoven fabric manufacturing process by the high-pressure water jet. Therefore, polyester staple fibers to be manufactured into towels and premoistened towels must retain hydrophilicity after the high-pressure water jet process, i.e., to have durable hydrophilicity.

On the other hand, polyester staple fibers undergo a carding process before being processed with a high-pressure water jet. However, the generation of excessive static electricity on the polyester staple fibers during carding results in irregularities in the web, which leads to spots of uneven thickness of the resultant nonwoven fabric. Therefore a fiber-treating agent, which controls the generation of static electricity and attains high fiber processability during carding, is applied to polyester staple fibers. Such fiber-treating agent usually contains surface-active agents as a major component in order to attain good fiber processability during carding and control the generation of static electricity. However, these surface-active agents have a propensity to foam, and the foaming of the fiber-treating agent removed during the high-pressure water jet process will disturb web structure and result in spots of uneven thickness in the nonwoven fabric and reduced nonwoven fabric quality. In addition, industrial water and river water, which are usually hard water, are often utilized for the high-pressure water jet, and create a problem when reused in a circulation system, i.e., the clogging of water-circulation nozzles due to the formation of deposits such as calcium salts.

Several prior art references described below have disclosed methods for solving each of the problems relating to durable hydrophilicity and low foaming.

In order to achieve durable hydrophilicity, one prior art reference has proposed a method in which a treating agent comprising a polyester-polyether block copolymer, nonionic surfactant, anionic surfactant, and cationic surfactant was employed (Japanese Patent Publication 2001-303450). Cationic surfactants and anionic surfactants, however, have another disadvantage, i.e., generation of bubbles, due to a substantial degree of foaming usually found in those surfactants.

In addition, in order to achieve low foamability, another prior art reference has proposed a treating agent which contains an ester compound comprising a dibasic acid and diol, and an alkyl phosphate ester (Japanese Patent Publication 2003-328272). An ester compound of an aliphatic dibasic acid and diol, however, cannot impart sufficiently durable hydrophilicity to the fibers.

In addition, another prior art reference has proposed a fiber-treating agent that contains a polyether compound, a polyether-polyester compound, and an organic phosphate salt, and is applied to synthetic fiber processed in a texturing process under increasing texturing speed and temperature (Japanese Patent Publication 2003-171879). Here, the agent contains a polyether-polyester compound, for example, a compound produced by reacting an aromatic carboxylic acid, polyoxyalkylene glycol, and ethylene glycol in condensation polymerization, although the agent has a disadvantage in that it is unable to impart sufficient hydrophilicity.

These prior art references only disclose imparting some properties to nonwoven fabrics, and no attention is paid to controlling deposits, which concurrently exists as a problem.

As described above, a fiber-treating agent that satisfies all of the requirements of durable hydrophilicity, low foaming, and minimized deposits has not yet been provided.

The problem to be solved by the present invention is providing a fiber-treating agent that will provide the polyester fibers with good card passability during carding, and that will simultaneously provide qualities such as improved nonwoven processing efficiency during the nonwoven fabric manufacturing process with high-pressure water jets, i.e., a lower propensity to foam and controlled deposit formation, and sufficient hydrophilicity in nonwoven fabric after the high-pressure water jet process; as well as polyester staple fibers and nonwoven fabric used therewith.

### SUMMARY OF THE INVENTION

As a result of research in order to solve the aforementioned problems, the present inventor has discovered specific weight ratios of a specific polyester compound (preferably a random copolymer), a specific polyester compound (preferably a block copolymer), and an alkyl phosphate salt contained in an agent that can maximize the performance of each component and can minimize the undesirable effects of each component in order to attain good card passibility during carding, low foaming in high-pressure water jets, stability in hard water, and durable hydrophilicity during the nonwoven fabric manufacturing process, and thereby achieved the present invention.

A fiber-treating agent of the present invention comprises a component A, which is a polyester compound produced by carrying out a condensation polymerization of an alkylene glycol, a polyalkylene glycol, and at least one member selected from the group consisting of aromatic dicarboxylic acids, C₄₋₂₂ aliphatic dicarboxylic acids, and their ester-forming derivatives; a component B, which is a polyester compound produced by carrying out a condensation polymerization of a polyoxyalkylene monol, an alkylene glycol, and at least one member selected from the group consisting of aromatic dicarboxylic acids and their ester-forming derivatives; and a component C, which is a C₄₋₆ alkyl phosphate salt, wherein the amounts of component A, component B, and component C are 15 to 45 weight percent, 20 to 60 weight percent, and 15 to 45 weight percent, respectively.

The above-mentioned fiber-treating agent of the present invention is applied to polyester staple fibers, and the nonwoven fabric of the present invention comprises the polyester staple fibers to which the above-mentioned fiber-treating agent has been applied.

The fiber-treating agent of the present invention allows polyester fibers to be processed efficiently during carding, and can improve processing efficiency in the nonwoven fiber manufacturing process with high-pressure water jets. In other words, the fiber-treating agent can decrease foaming and deposit formation. In addition, the fiber-treating agent can impart sufficient hydrophilicity to nonwoven fabrics after the high-pressure water jet process, and can make the nonwoven fabric suitable for end uses such as towels and premoistened towels, where the use of polyester fibers was restricted. Furthermore, the fiber-treating agent of the present invention can be made stable in hard water and decrease deposit formation in industrial water used in the high-pressure water jet process.

### DETAILED DESCRIPTION OF THE PREFERRED EMBODIMENTS

A C₄₋₆ alkyl phosphate salt, which is component C constituting the fiber-treating agent of the present invention, has excellent antistaticity for controlling the generation of static electricity, a low foaming propensity, and excellent stability in hard water, and functions to control foaming. However, it does not have durable hydrophilicity. The polyester compound for component B has highly durable hydrophilicity, and excellent stability in hard water, but it has almost no antistaticity, and foams excessively to generate foam which does not disappear easily. The polyester compound for component A has excellent stability in hard water and a low foaming propensity, but the durable hydrophilicity attained by component A is slightly inferior to that of component B. In short, each of the components by itself cannot achieve all of the requirements mentioned above. Such components, each of which is not able to function satisfactorily by itself, however, may be necessary for solving the aforementioned problems, because a combination of such components with specific components in specific ratios may implement or counterbalance the shortage of each of the components, and the performance of the combination may be maximized beyond the sum of the performance of each component.

Examples of the aromatic dicarboxylic acids, C₄₋₂₂ aliphatic dicarboxylic acids, and their ester-forming derivatives to be formed into component A of the present invention include phthalic acid, terephthalic acid, isophthalic acid, dimethyl terephthalate, dimethyl 5-sulfo-isophthalate, 2,6-naphthalene dicarboxylic acid, dimethyl 1,4-naphthalene dicarboxylate, succinic acid, glutaric acid, adipic acid, dimethyl adipate, pimelic acid, sebacic acid, and dimethylene sebacic acid. Above all, aromatic dicarboxylic acids are preferable, and terephthalic acid is even more preferable.

Examples of preferable alkylene glycols include C₂₋₆ alkylene glycols, specifically, ethylene glycol, propylene glycol, butylene glycol, and the like. Examples ofpolyalkylene glycols include polyoxyalkylene glycols having C₂-C₄ oxyalkylene units, and preferable polyoxyalkylene glycols are polyethylene glycols, polypropylene glycols, random EO/PO (20-80:80-20 mole ratio) copolymers, and random EO/PO (60:40 mole ratio) copolymers. Above all, polyethylene glycols represented by the following formula (I):

H(OCH₂CH₂)ₘOH (I)

(wherein m is an integer ranging from 2 to 250) is preferable. The polyalkylene glycols preferably have a molecular weight of 5000 or less for easy defoaming.

Only one of the alkylene glycols or polyalkylene glycols alone may be used, or a combination of two or more of them may be used. The combination may include both the alkylene glycols and polyalkylene glycols, or members of only the alkylene glycols or the polyalkylene glycols having different molecular weights, or the like. Any number of different polyalkylene glycols (for example, polyethylene glycols) may be combined so long as their molecular weight is 5000 or less.

Polyester compounds obtained by reacting an aromatic dicarboxylic acid, ethylene glycols, and polyethylene glycols in condensation polymerization are preferable for component A, and random copolyesters are more preferable. The reaction for producing the polyester compounds may be carried out with the processes and conditions properly selected from those known in the technical field. The reaction may be carried out at either normal pressure or reduced pressure.

Examples of the polyoxyalkylene monol constituting component B of the present invention include those obtained by end-capping polyoxyalkylene diol on one end with a monohydrocarbon group. The polyoxyalkylene diol is obtained by adding C₂-C₄ alkylene oxides into C₂-C₆ alkylene diols, such as ethylene glycol, 1,2-propane diol, 1,3-propane diol, 1,4-butane diol, 1,6-hexane diol, and neopentyl glycol. Examples of the monohydrocarbon group include C₁-C₂₂ aliphatic hydrocarbon groups, such as methyl group, ethyl group, butyl group, n-octyl group, lauryl group, stearyl group, isopropyl group, and 2-ethylhexyl group; and aromatic hydrocarbon groups, such as phenyl group, monobutylphenyl group, octylphenyl group, and nonylphenyl group.

Specifically, the polyoxyalkylene monol represented by the following formula (II) is preferable:

X-O(CH₂CH₂O)ₙ-H (II)

(wherein X is a C₁-C₉ alkyl group or C₁-C₉ phenyl group, preferably C₁-C₉ phenyl group).

The C₁-C₉ alkyl group may be any of straight-chain or branched-chain alkyl groups.

The preferable polyoxyalkylene monol constituting component B is polyoxyethylene monol.

The aromatic dicarboxylic acids and their ester-forming derivatives constituting component B are the same as those exemplified for component A. Among those substances, aromatic dicarboxylic acids are preferable, and terephthalic acid and/or isophthalic acid are even more preferable.

The alkylene glycols constituting component B are the same as those exemplified for component A.

The preferable polyester compounds for component B are those obtained by reacting an aromatic dicarboxylic acid, an ethylene glycol, and a polyoxyethylene monol in condensation polymerization, and in particular, a block copolyester is more preferable. The preferable molecular weight of the polyester compound for component B ranges from 5000 to 7000. The preferable molecular weight of the polyoxyethylene monol represented by the formula (II) ranges from 1500 to 5000.

The reaction may be carried out with processes and conditions properly selected from those known in the technical field.

The preferable alkyl phosphate salts for component C are C₄-C₆ alkyl phosphate salts, in consideration of the foaming propensity, stability in hard water, and control of the generation of static electricity. Specifically, hexyl phosphate salt, pentyl phosphate salt, butyl phosphate salt, and the like are preferable, and hexyl phosphate salt is more preferable.

Examples of the alkyl phosphate salts include potassium salts, sodium salts, ammonium salts, and alkanol amine salts, and in this case the preferable carbon number of the alkanol amine constituting the salts ranges from 1 to 5.

The amounts of the polyester compound for component A, the polyester compound for component B, and component C in the agent of the present invention are in the ratio of 15- 45 weight percent (preferably 30 to 40 weight percent):20-60 weight percent (preferably 30 to 40 weight percent): 15-45 weight percent (preferably 20 to 40 weight percent), respectively. The weight ratios of the components A, B, and C were determined in consideration of both decreasing foam and attaining durable hydrophilicity, and in particular, the weight ratio of component C was determined in consideration of retaining antistaticity in combination with other components.

The polyester staple fibers of the present invention are preferably formed of polyester comprising mainly ethylene terephthalate units, more preferably of polyethylene terephthalate. Polyester is further preferably produced by copolymerizing 50 weight percent or more of terephthalic acid as an acid moiety, and one or more of the members selected from the group comprising isophthalic acid, diphenyl sulfone dicarboxylic acid, sodium 3,5-dicarboxybenzene sulfonate, naphthalene dicarboxylic acid, and the like. Another preferable polyester is one produced by copolymerizing 70 weight percent or more of ethylene glycol as a glycol moiety, and one or more of the members selected from the group consisting diethylene glycol, butane diol, cyclohexane dimethanol, neopentyl glycol, and the like. The polyester staple fibers are produced in a melt-spinning process with the polyester mentioned above, and the cut length and crimp of the resultant polyester staple fibers are selected according to the end use thereof. The polyester fibers may have any cross sectional shape, such as a round shape, a hollow round shape, an irregular shape, a hollow irregular shape, and the like.

The fiber-treating agent of the present invention may be used in a form of aqueous solution or emulsion containing 1.5 to 15 weight percent, preferably 2 to 12 weight percent, of the agent. For example, the agent may be applied to the polyester staple fibers mentioned above during spinning process, before or during drawing process, or before crimping. The application before crimping may be omitted. During spinning and drawing processes, the agent may be applied to fibers with ordinary procedures, such as kiss-roll application, spray, or bath immersion. Antimicrobials, antioxidants, antiseptics, delusterants, pigments, antimicrobials, perfumes, and the like may be added to the fiber-treating agent.

The nonwoven fabric of the present invention may be produced by entangling the polyester staple fibers mentioned above in a process known in the technical field; for example, needle punching, thermal bonding, hydroentangling, resin bonding, stitch bonding, and the like. The nonwoven fabric may contain one or more of natural fibers, such as cotton and silk; regenerated fibers, such as viscose rayon fiber or polynosic fiber; and synthetic fibers such as polypropylene fiber, nylon fiber, and acrylic fiber, in addition to polyester staple fibers.

The embodiments of the fiber-treating agent of the present invention are described more specifically as follows.

The effect of the fiber-treating agent of the present invention was studied by testing four properties. They are (1) foaming of an emulsion containing 0.1 weight percent of the fiber-treating agent, (2) card passability, (3) durable hydrophilicity, and (4) stability in hard water.

### (1) Foaming of an emulsion containing 0.1 weight percent of the fiber-treating agent

An emulsion containing 0.1 weight percent of the active content of the fiber-treating agent was prepared, and 10 ml of the emulsion was added to a 30-ml measuring cylinder. After shaking the measuring cylinder about ten strokes, the height of the generated foam was measured immediately after the shaking and 5 minutes thereafter. The test was carried out at 20°C.

| | | |
|---|---|---|
| Foaming: | ○: | foam 1 cm high or lower |
| | ×: | foam higher than 1 cm |

### (2) Card passability

A fiber-treating agent was applied to a polyester staple fiber of 1.45 dtx and 38 mm cut length with spray, in the fiber-to-agent ratio of 100 parts by weight to 0.2 parts by weight. The fiber was then dried in an oven at 80°C for 2 hours to be prepared into a fiber sample. Then the fiber sample was processed into a web with a miniature card, and the behavior of the fiber and the generated static electricity in the processing with the card were measured or evaluated.

Card passability:
○: no fiber wrapping on cylinder, no imbedded fiber in wire clothing, and no neps
×: fiber wrapping on cylinder, imbedded fiber in wire clothing and neps found Generated static electricity:
○: within the range from 0 to -0.05 kv
×: more than -0.05 kv

### (3) Durable hydrophilicity

Five grams of the web obtained in the testing of (2) processability in carding was placed in a polypropylene net basket and placed on the surface of water at 20°C. Then the time required for the web in the basket to sink in the water was measured. Then the wet web was dried, and the sinking time in the water at 20°C was again tested. The testing was repeated several times until the sinking time exceeded 30 seconds, and at that time the hydrophilicity of the web was judged to have decreased. A web with greater repeated sinking times indicates that the web has more durable hydrophilicity.

### (4) Stability in hard water

A hard water containing 50 ppm of calcium ion was prepared, and a solution containing 1 weight percent of fiber-treating agent was prepared using the hard water. Another solution containing the same concentration of a fiber-treating agent was prepared with ion-exchanged water. The solution samples were checked immediately after the samples were prepared, and the solution samples were checked 3 days after being prepared, in order to determine whether there was any difference between the solution with the hard water and that with the ion-exchanged water.

Stability in hard water:
○: similar appearance between the solutions with ion-exchanged water and hard water
×: more precipitation found in the solution with hard water than in the solution with ion-exchanged water

### Example 1

Components of fiber-treating agents were prepared as described below to formulate fiber-treating agents, and the fiber-treating agents were tested in the procedures mentioned above. The results are shown in Table 1.

### Polyester compound for component A

A polyester compound was obtained by reacting 22 parts by weight of terephthalic acid, 8 parts by weight of ethylene glycol, and 70 parts by weight of polyethylene glycol (M.W. 4000) simultaneously in condensation polymerization.

### Polyester compound for component B

An ester reaction was completed by mixing 25 parts by weight of a blend of dimethyl terephthalate and dimethyl isophthalate being blended in the mol ratio of 80:20, 20 parts by weight of ethylene glycol, and 55 parts by weight of polyethylene glycol monophenyl ether (average M.W. 3000), and adding a small amount of a catalyst, reacting at 175 to 235°C at normal pressure for 180 minutes, and removing almost theoretical amount of methanol with distillation.

Then a small amount of a catalyst was added to the resultant ester, and the ester was reacted at 230 to 260°C at reduced pressure of 3 mmHg for 20 minutes followed by the reaction at 275°C at a pressure ranging from 0.1 to 0.5 mmHg for 40 minutes. The resultant copolymer (average M.W. 7000) was immediately added to water at normal temperature while agitating to obtain an aqueous dispersion.

### Organic phosphate salt for component C

Hexyl phosphate ester was produced in the phosphorylation carried out by adding 10 parts by weight of phosphoric anhydride to 25 parts by weight of hexyl alcohol, and the resultant hexyl phosphate ester was added to potassium hydroxide solution to obtain potassium hexyl phosphate salt.

### Formulation of fiber-treating agent

The components A, B, and C produced in the above procedures were blended in the weight ratio of 40:30:30 for component A, component B, and component C, respectively, based on their active ingredient weight, to be formulated into the fiber-treating agent of Example 1.

### Example 2

A polyester compound for component A obtained by reacting 22 parts by weight of terephthalic acid, 8 parts by weight of ethylene glycol, and 70 parts by weight of polyethylene glycol (M.W. 3000) simultaneously in condensation polymerization, the polyester compound for component B produced in Example 1, and the potassium hexyl phosphate salt for component C produced in Example 1 were blended in the weight ratio of 40:30:30 for component A, component B, and component C, respectively, based on their active ingredient weight, to be formulated into the fiber-treating agent of Example 2.

### Example 3

A polyester compound for component A obtained by reacting 9 parts by weight of terephthalic acid, 13 parts by weight of isophthalic acid, 8 parts by weight of diethylene glycol, and 70 parts by weight of polyethylene glycol (M.W. 4000) simultaneously in condensation polymerization, the polyester compound for component B produced in Example 1, and the potassium hexyl phosphate salt for component C produced in Example 1 were blended in the weight ratio of 40:30:30 for component A, component B, and component C, respectively, based on their active ingredient weight, to be formulated into the fiber-treating agent of Example 3.

### Example 4

A polyester compound for component A obtained by reacting 22 parts by weight of terephthalic acid, 4 parts by weight of ethylene glycol, 4 parts by weight of diethylene glycol, and 70 parts by weight of polyethylene glycol (M.W. 4000) simultaneously in condensation polymerization, the polyester compound for component B obtained in Example 1, and a sodium hexyl phosphate salt for component C were blended in the weight ratio of 40:30:30 for component A, component B, and component C, respectively, based on their active ingredient weight, to be formulated into the fiber-treating agent of Example 4.

### Example 5

The polyester compound for component A obtained in Example 1; the polyester compound for component B, which was obtained in a process where an ester reaction was completed by mixing 25 parts by weight of a dimethyl terephthalate, 20 parts by weight of ethylene glycol, and 55 parts by weight of polyethylene glycol monocyclohexyl ether (average M.W. 2000), and adding a small amount of a catalyst, reacting at 175 to 235°C at normal pressure for 180 minutes, and removing almost the theoretical amount of methanol with distillation, then to the resultant ester a small amount of a catalyst was added to react the ester at 230 to 260°C at reduced pressure of 3 mmHg for 20 minutes followed by the reaction at 275°C at a pressure from 0.1 to 0.5 mmHg for 40 minutes to obtain a polymer (average M.W. 5000), and the polymer was immediately added to water at normal temperature while agitating to obtain an aqueous dispersion; and the potassium hexyl phosphate salt for component C obtained in Example 1 were blended in the weight ratio of 30:45:25 for component A, component B, and component C, respectively, based on their active ingredient weight, to be formulated into the fiber-treating agent of Example 5.

### Example 6

The polyester compound for component A obtained in Example 1; the polyester compound for component B, which was obtained in a process where an ester reaction was completed by mixing 25 parts by weight of a terephthalic acid, 20 parts by weight of ethylene glycol, and 55 parts by weight of polyethylene glycol monomethyl ether (average M.W. 2000), and adding a small amount of a catalyst, reacting at 175 to 235°C at normal pressure for 180 minutes, and removing almost the theoretical amount of methanol with distillation, then to the resultant ester a small amount of a catalyst was added to react the ester at 230 to 260°C at reduced pressure of 3 mmHg for 20 minutes followed by the reaction at 275°C at a pressure from 0.1 to 0.5 mmHg for 40 minutes to obtain a polymer (average M.W. 5000), and the polymer was immediately added to water at normal temperature while agitating to obtain an aqueous dispersion; and the potassium hexyl phosphate salt for component C obtained in Example 1 were blended in the weight ratio of 20:60:20 for component A, component B, and component C, respectively, based on their active ingredient weight, to be formulated into the fiber-treating agent of Example 6.

### Comparative Example 1

An ester compound obtained by reacting sebacic acid and polyethylene glycol (M.W. 4000), and potassium hexyl phosphate salt were blended in the weight ratio of 70:30, based on their active ingredient weight, to be prepared into the fiber-treating agent of Comparative Example 1.

### Comparative Example 2

The polyester compound for component A obtained in Example 1 by reacting 22 parts by weight of terephthalic acid, 4 parts by weight of ethylene glycol, 4 parts by weight of diethylene glycol, and 70 parts by weight of polyethylene glycol (M.W. 4000) simultaneously in condensation polymerization, the polyester compound for component B obtained in Example 1, and the potassium hexyl phosphate salt for component C obtained in Example 1 were blended in the weight ratio of 10:40:50 for component A, component B, and component C, respectively, based on their active ingredient weight, to be formulated into the fiber-treating agent of Comparative Example 2.

### Comparative Example 3

The polyester compound for component A obtained in Example 1 by reacting 22 parts by weight of terephthalic acid, 4 parts by weight of ethylene glycol, 4 parts by weight of diethylene glycol, and 70 parts by weight of polyethylene glycol (M.W. 4000) simultaneously in condensation polymerization, the polyester compound for component B obtained in Example 1, and the potassium hexyl phosphate salt for component C obtained in Example 1 were blended in the weight ratio of 45:45:10 for component A, component B, and component C, respectively, based on their active ingredient weight, to be formulated into the fiber-treating agent of Comparative Example 3.

### Comparative Example 4

The polyester compound obtained in Example 1 for component A by reacting 22 parts by weight of terephthalic acid, 4 parts by weight of ethylene glycol, 4 parts by weight of diethylene glycol, and 70 parts by weight of polyethylene glycol (M.W. 4000) simultaneously in condensation polymerization, the polyester compound for component B obtained in Example 1, and the potassium hexyl phosphate salt for component C obtained in Example 1 were blended in the weight ratio of 50:10:40 for component A, component B, and component C, respectively, based on their active ingredient weight, to be formulated into the fiber-treating agent of Comparative Example 4.

### Comparative Example 5

The polyester compound for component A obtained in Example 1 by reacting 22 parts by weight of terephthalic acid, 4 parts by weight of ethylene glycol, 4 parts by weight of diethylene glycol, and 70 parts by weight of polyethylene glycol (M.W. 4000) simultaneously in condensation polymerization, the polyester compound for component B obtained in Example 1, and potassium octyl phosphate salt, were blended in the weight ratio of 40:30:30, respectively, based on their active ingredient weight, to be formulated into the fiber-treating agent of Comparative Example 5.

### Comparative Example 6

The polyester compound for component B obtained in Example 1, (D) a potassium lauryl phosphate salt, and (E) a sodium dioctyl sulfosuccinate salt were blended in the weight ratio of 80:10:10 for component B, (D), and (E), respectively, based on their active ingredient weight, to be formulated into the fiber-treating agent of Comparative Example 6.

### Comparative Example 7

A polyether compound of M. W. 2500 obtained by adding a block copolymer chain of 60:40 mol ratio mixture of ethylene oxide and propylene oxide into tetradecyl alcohol; a polyether-polyester compound of average M. W. 10000 obtained by reacting a mixture of dimethyl terephthalate and dimethyl isophthalate (80:20 mol ratio), polyoxyalkylene glycol of average M.W. 1000 obtained by reacting 60:40 mol ratio mixture of ethylene oxide and polyethylene oxide randomly in addition polymerization, and ethylene glycol, in the mol ratio of 10:8:2, respectively, in condensation-polymerization; and sodium hexylphosphate salt were blended in the weight ratio of 50:30:20, respectively, based on their active ingredient weight to be formulated into a fiber-treating agent of Comparative Example 7.

**Table 1**

| Test No. | Example | | | | | | Comparative Example | | | | | | |
|---|---|---|---|---|---|---|---|---|---|---|---|---|---|
| | 1 | 2 | 3 | 4 | 5 | 6 | 1 | 2 | 3 | 4 | 5 | 6 | 7 |
| Foaming | ○ | ○ | ○ | ○ | ○ | ○ | ○ | × | ○ | ○ | × | × | ○ |
| Card passability | ○ | ○ | ○ | ○ | ○ | ○ | ○ | ○ | ○ | ○ | ○ | × | ○ |
| Static electricity | ○ | ○ | ○ | ○ | ○ | ○ | ○ | ○ | × | ○ | ○ | ○ | ○ |

| Durable hydrophilicity Repeated web sinking time (sec) | | | | | | | | | | | | | |
|---|---|---|---|---|---|---|---|---|---|---|---|---|---|
| 1st | 3 | 3 | 3 | 3 | 3 | 3 | 4 | 4 | 4 | 5 | 4 | 4 | 4 |
| 2nd | 3 | 3 | 3 | 3 | 4 | 4 | 12 | 4 | 4 | 8 | 4 | 4 | 6 |
| 3rd | 4 | 4 | 4 | 4 | 4 | 4 | 32 | 4 | 4 | 16 | 4 | 4 | 8 |
| 5th | 4 | 4 | 4 | 4 | 4 | 4 | -- | 5 | 5 | 34 | 5 | 5 | 12 |
| 8th | 6 | 6 | 6 | 6 | 6 | 5 | -- | 5 | 5 | -- | 5 | 5 | 32 |
| 16th | 9 | 8 | 9 | 10 | 10 | 8 | -- | 10 | 9 | -- | 9 | 10 | -- |
| Stability in hard water | ○ | ○ | ○ | ○ | ○ | ○ | ○ | ○ | ○ | ○ | × | × | ○ |

According to the results in Table 1, the fiber-treating agent of the present invention is clearly an excellent fiber-treating agent having durable hydrophilicity, stability in hard water, a low foaming propensity, and good card passability.

Consequently, the fiber-treating agent of the present invention will provide good card passibility, improved efficiency in nonwoven fabric manufacturing processes with high-pressure water jets, i.e., decreased foaming and controlled deposit formation, and furthermore, sufficient hydrophilicity on nonwoven fabrics after the high-pressure water jet process, contrary to conventional art which could not attain all of these requirements.

### Example 7

The web prepared in the card passability test (2) was processed into nonwoven fabric in a hydro-entangling process.

In the hydroentangling operation, the processing efficiency of the web did not decrease because the water did not foam. The resultant nonwoven fabric retained hydrophilicity, and was able to have aqueous treating chemicals, resin emulsions, or the like, uniformly covered on the surface thereof.

### Industrial Applicability

The fiber-treating agent of the present invention is applicable to fibers, in particular, to polyester fibers, which are utilized to manufacture premoistened towels, towels, disposable diapers, sanitary napkins, disposable body wiper, premoistened tissue, durable tissue for cooking and kitchen use, duster, tray mats, healthcare and hygienic products such as surgical drapes and surgical gowns, household products, food packaging materials, and the like.

## Claims

1. A fiber-treating agent comprising:
a component A comprising a polyester compound produced by carrying out a condensation polymerization of an alkylene glycol, a polyalkylene glycol, and at least one member selected from the group consisting of aromatic dicarboxylic acids, C₄₋₂₂ aliphatic dicarboxylic acids, and their ester-forming derivatives;
a component B comprising a polyester compound produced by carrying out a condensation polymerization of a polyoxyalkylene monol, an alkylene glycol, and at least one member selected from the group consisting of aromatic dicarboxylic acids and the ester-forming derivatives thereof; and
a component C comprising a C₄₋₆ alkyl phosphate salt;
wherein the ratio of the amount of component A, component B, and component C is 15 to 45 weight %, 20 to 60 weight %, and 15 to 45 weight %, respectively.

2. A fiber-treating agent according to claim 1, wherein component A comprises a polyester compound produced by carrying out a condensation polymerization of an aromatic dicarboxylic acid, ethylene glycol, and polyethylene glycol represented by the following formula (I):
H(OCH₂CH₂)ₘOH (I)
wherein m is an integer between 2 to 250.

3. A fiber-treating agent according to claim 1 or 2, wherein component B comprises a polyester compound produced by carrying out a condensation polymerization of an aromatic dicarboxylic acid, ethylene glycol, and polyoxyethylene monol.

4. A fiber-treating agent according to claim 3, wherein the polyoxyethylene monol of component B is a compound represented by the following formula (II), and has a molecular weight of 1,500 to 5,000;
X-O(CH₂CH₂O)ₙ-H (II)
wherein X is an alkyl group having 1 to 9 carbon atoms or a phenyl group.

5. A fiber-treating agent according to any one of claims 1 to 4, wherein component B comprising the polyester compound has a molecular weight of 5,000 to 7,000.

6. A fiber-treating agent according to any one of claims 1 to 5, wherein:
component A is a polyester compound produced by carrying out a condensation polymerization of an aromatic dicarboxylic acid, ethylene glycol, and polyethylene glycol represented by the above-mentioned formula (I);
component B is a polyester compound obtained from the polyoxyethylene monol represented by the above-mentioned formula (II), an aromatic dicarboxylic acid, and ethylene glycol, and has a molecular weight of 5,000 to 7,000; and
the ratio of the amount of component A, component B, and component C is 30 to 40 weight %, 30 to 40 weight %, and 20 to 40 weight %, respectively.

7. A fiber-treating agent according to any one of claims 1 to 6, wherein the aromatic dicarboxylic acid of component A is terephthalic acid.

8. A fiber-treating agent according to any one of claims 4 to 7, wherein the X in the compound represented by formula (II) of component B is a phenyl group.

9. A fiber-treating agent according to any one of claims 1 to 8, wherein the aromatic dicarboxylic acid of component B is terephthalic acid and/or isophthalic acid.

10. A fiber-treating agent according to any one of claims 1 to 9, wherein the alkyl phosphate salt of component C is a hexyl phosphate salt.

11. Polyester staple fibers to which the fiber-treating agent according to any one of claims 1 to 10 has been applied.

12. A nonwoven fabric comprising polyester staple fibers to which the fiber-treating agent according to any one of claims 1 to 10 has been applied.
